# EUROPÄISCHE PATENTSCHRIFT

(11) **EP 3 642 501 B1**
(45) Veröffentlichungstag und Bekanntmachung des Hinweises auf die Patenterteilung: **15.09.2021**
(21) Anmeldenummer: 18732251.6
(22) Anmeldetag: 08.06.2018
(51) Int. Cl.: F16D 1/08, F16B 39/28, F16B 7/02, F16B 7/18, H02K 7/04, H02K 7/00, F16C 3/00, F16C 3/02, F16D 1/06

(54) **VERBINDUNG, AUFWEISEND EINE IN EINE HOHLWELLE ZUMINDEST TEILWEISE EINGESTECKTE WELLE UND EIN AUF DIE HOHLWELLE AUFGESTECKTES RINGTEIL UND PLANETENGETRIEBE**
CONNECTION COMPRISING A HOLLOW SHAFT, A SHAFT AND A COLLAR ON THE HOLLOW SHAFT; PLANETARY GEAR
CONNEXION COMPRENANT UN ARBRE, UN ARBRE CREUX ET UN ANNEAU GLISSE SUR L'ARBRE CREUX. TRAIN PLANETAIRE

(30) Priorität: 22.06.2017 DE 102017005890
(43) Veröffentlichungstag der Anmeldung: 29.04.2020
(73) Patentinhaber: SEW-EURODRIVE GmbH & Co. KG, 76646 Bruchsal (DE)
(72) Erfinder: HALLER, Sascha, 76135 Karlsruhe (DE); SCHILLINGER, Jens, 76437 Rastatt (DE); DENKHAUS, Max, 76698 Ubstadt-Weiher (DE)
(86) Internationale Anmeldenummer: PCT/EP2018/025151
(87) Internationale Veröffentlichungsnummer: WO 2018/233874

(56) Entgegenhaltungen:
- EP-A1- 2 479 447
- DE-A1- 10 162 910
- DE-A1- 10 311 572
- DE-A1-102014 007 063
- US-A- 6 074 125

## Beschreibung

Die Erfindung betrifft eine Verbindung, aufweisend eine in eine Hohlwelle zumindest teilweise eingesteckte Welle und ein auf die Hohlwelle aufgestecktes Ringteil und ein Planetengetriebe.

Es ist allgemein bekannt, dass bei einem Spannring, eine kraftschlüssige Verbindung mittels eines Ringteils herstellbar ist.

**Aus der** DE 103 11 572 A1 **ist als nächstliegender Stand der Technik eine Anordnung zur Verbindung eines rohrförmigen Elements mit einem darin erstreckten Körper bekannt.**

**Aus der** DE 101 62 910 A1 **ist eine Klemmspaltmutter bekannt.**

**Aus der** DE 10 2014 007 063 A1 **ist ein Getriebemotor mit einer Welle-Nabe-Verbindung bekannt.**

Der Erfindung liegt daher die Aufgabe zugrunde, eine Verbindung weiterzubilden, wobei die Verbindung auf der schnell drehenden, also eintreibenden, Seite eines Planetengetriebes verwendbar ist.

Erfindungsgemäß wird die Aufgabe bei der Verbindung nach den in Anspruch 1 und bei dem Planetengetriebe nach den in Anspruch 15 angegebenen Merkmalen gelöst.

Wichtige Merkmale der Erfindung bei der Verbindung sind, dass sie eine in eine Hohlwelle zumindest teilweise eingesteckte Welle und ein auf die Hohlwelle aufgestecktes Ringteil, insbesondere eines Spannrings, aufweist,
wobei das Ringteil axial begrenzt ist von einem an der Welle ausgeformten, insbesondere radial hervorstehenden, Bund und/oder das Ringteil an einem oder dem Bund der Welle, insbesondere an einem an der Welle ausgeformten, insbesondere radial hervorstehenden, Bund, anliegt,
wobei die Hohlwelle vom Bund beabstandete Schlitze, insbesondere Axialschlitze aufweist,
wobei das Ringteil, insbesondere an seiner Innenseite und/oder an seiner Ringöffnung und/oder insbesondere an seinem dem Bund zugewandten axialen Endbereich, eine Fase aufweist,
so dass der Innendurchmesser des Ringteils in dem von der Fase überdeckten axialen Bereich größer ist als der Innendurchmesser in demjenigen axialen Bereich, in welchem das Ringteil die Hohlwelle berührt,
wobei das Ringteil Verdickungsbereiche aufweist, insbesondere wobei das Ringteil im von den Verdickungsbereichen überdeckten Umfangswinkelbereich eine größere radiale Breite aufweist als in den sonstigen Umfangswinkelbereichen.

Von Vorteil ist dabei, dass die Verbindung auswuchtbar und mit geringem Massenträgheitsmoment ausführbar ist. Dabei ist die kraftschlüssige Verbindung mittels Anziehen der Schraube und somit bewirktem Aufschrumpfen des Ringteils auf die Hohlwelle effektiv ausführbar. Also ist mit geringem Aufwand an Masse ein hohes Verbindungsmoment erreichbar. Das Auswuchten ist mittels der Formgebung der Verdickungsbereiche ausführbar. Dabei ist sogar das Material und die Form der Schraube berücksichtigbar. Insbesondere ist das in dem Schlitz des Ringteils fehlende Material mittels der Verdickungsbereiche ausgleichbar.

Erfindungsgemäß weist das Ringteil an seinem Umfang einen radial und axial durchgehenden Schlitz auf,
wobei eine Schraube durch den Schlitz hindurchgeführt ist und der Schraubenkopf der Schraube ist an einer Fläche, insbesondere Schraubenkopfanlagefläche, abgestützt, wobei der Gewindebereich der Schraube in eine auf der von der Fläche abgewandten Seite des Schlitzes angeordneten Gewindebohrung eingeschraubt ist,
insbesondere wobei die Schraubenachse der Schraube einen nicht verschwindenden Winkel zur Normalenrichtung derjenigen Ebene, insbesondere Hilfsebene, aufweist, welche die Ringachse enthält und durch die in Umfangsrichtung gesehene Mitte des Schlitzes, insbesondere durch die auf kleinstem Radialabstand des Schlitzes, in Umfangsrichtung gesehene Mitte des Schlitzes führt. Von Vorteil ist dabei, dass mittels der Schraube beim Einschrauben der Schraube in den Gewindebereich die Schlitzbreite verringerbar ist und somit das Ringteil auf die Hohlwelle aufschrumpfbar ist.
Bei einer vorteilhaften Ausgestaltung überdeckt der erste der Verdickungsbereiche den von der Gewindebohrung überdeckten Umfangswinkelbereich,
wobei der zweite der Verdickungsbereiche einen zwischen Schlitz und Fläche, insbesondere Schraubenkopfanlagefläche, angeordneten Umfangswinkelbereich überdeckt. Somit ist das infolge des Schlitzes fehlende Material des Ringteils mittels geeigneter Formgebung der Verdickungsbereiche ausgleichbar.

Bei einer vorteilhaften Ausgestaltung sind die Verdickungsbereiche derart ausgeformt, dass der gesamte Spannring, also das Ringteil samt der Schraube, ausgewuchtet ist. Insbesondere ist auch die Materialsorte der Schraube berücksichtigbar.

Erfindungsgemäß ist die radiale Breite des Ringteils abhängig vom Umfangswinkel, insbesondere in den von den Verdickungsbereichen überdeckten Umfangswinkelbereichen größer ist als in den übrigen Umfangswinkelbereichen. Von Vorteil ist dabei, dass eine einfache Herstellung ausführbar ist. Dabei muss für das Auswuchten kein separater Herstellverfahrensschritt ausgeführt werden sondern die bloße Formgebung der Verdickungsbereiche wird geeignet gewählt.

Bei einer vorteilhaften Ausgestaltung überlappt der vom in die Hohlwelle eingesteckten Bereich der Welle überdeckte axiale Bereich mit dem vom Ringteil überdeckten axialen Bereich zumindest überlappt. Von Vorteil ist dabei, dass die Hohlwelle auf die in die Hohlwelle eingesteckte Welle aufschrumpfbar ist.

Erfindungsgemäß weist die Hohlwelle einen geschlitzten Bereich auf, welcher die Schlitze aufweist. Von Vorteil ist dabei, dass die Hohlwelle im geschlitzten Bereich elastischer ist als im sonstigen Bereich.

Bei einer vorteilhaften Ausgestaltung sind die Schlitze der Hohlwelle in Umfangsrichtung regelmäßig voneinander beabstandet. Von Vorteil ist dabei, dass eine einfache Herstellung ermöglicht ist.

Bei einer vorteilhaften Ausgestaltung sind die Schlitze durch die Hohlwelle, insbesondere durch die Wandung der Hohlwelle, radial durchgehend ausgeführt und/oder axial gerichtet. Von Vorteil ist dabei, dass eine hohe Elastizität erreichbar ist.

Bei einer vorteilhaften Ausgestaltung ist die Anzahl der Schlitze zwei oder größer. Von Vorteil ist dabei, dass eine unwuchtfreie Anordnung der Schlitze ausführbar ist, insbesondere durch regelmäßige Beabstandung der Schlitzte in Umfangsrichtung.

Bei einer vorteilhaften Ausgestaltung weist die Schraubenachse der Schraube zu einer, insbesondere geraden, Hilfslinie einen Winkel auf, wobei der Betrag des Winkels zwischen 5° und 30° beträgt, wobei die Hilfslinie durch den Mittelpunkt des Ringteils und durch die Mitte zwischen den innenliegenden, also auf kleinstem Durchmesser befindlichen Kanten des Schlitzes im Ringteil verläuft. Von Vorteil ist dabei, dass eine einfache Herstellung ermöglicht ist.

Bei einer vorteilhaften Ausgestaltung weist die Hohlwelle einen konstanten Außendurchmesser auf. Von Vorteil ist dabei, dass das Ringteil mittels einer einfach herstellbaren Fase außerhalb des geschlitzten Bereichs der Hohlwelle von der Hohlwelle beabstandbar ist.

Bei einer vorteilhaften Ausgestaltung berührt der von der Fase überdeckte axiale Bereich den vom Bund überdeckten axialen Bereich und/oder grenzt an diesen an. Von Vorteil ist dabei, dass der zum Bund benachbarte Bereich keine Berührfläche zwischen Ringteil und Hohlwelle aufweist. Somit ist in diesem Bereich, der an den geschlitzten Bereich angrenzt, ein Abstand zwischen Ringteil und Hohlwelle vorhanden. Auf diese Weise leitet das Ringteil die gesamte Aufschrumpfkraft in den geschlitzten Bereich ein und nicht in den axial zwischen Bund und geschlitztem Bereich angeordneten Bereich.

Bei einer vorteilhaften Ausgestaltung ist die Wandstärke und/oder der Querschnitt des Ringteils abhängig vom Umfangswinkel, insbesondere wobei die Wandstärke und/oder der Querschnitt in den von den Verdickungsbereichen überdeckten Umfangswinkelbereichen größer ist als in den übrigen Umfangswinkelbereichen. Von Vorteil ist dabei, dass das Auswuchten in einfacher Weise durch eine Radialbohrung ausführbar ist.

Bei einer vorteilhaften Ausgestaltung ist die Fase als konusförmige Fase ausgeführt oder als krümmungskegelförmige Fase oder als Stufenfase. Von Vorteil ist dabei, dass eine konusförmige Fase einfach herstellbar ist. Hingegen bewirkt die krümmungskegelige Fase eine höhere Festigkeit, weil der Übergang vom Bereich der Fase zum restlichen Bereich festigkeitsoptimiert ausbildbar ist. Die Stufenfase ist ähnlich einer Stufenbohrung sehr einfach und kostengünstig herstellbar, wobei die Beabstandung des Ringteils von der Hohlwelle im gesamten Bereich zwischen Bund und geschlitztem Bereich der Hohlwelle sicher gewährleistbar ist.

Bei einer vorteilhaften Ausgestaltung weist das Ringteil des Spannrings an seiner Innenseite die Fase auf, so dass das Ringteil von der Hohlwelle in dem von der Fase überdeckten axialen Bereich beabstandet ist, wobei der von der Fase überdeckte axiale Bereich sich anschließt an einen geschlitzten Bereich der Hohlwelle, so dass die Schrumpfkraft des Ringteils in den geschlitzten Bereich der Hohlwelle eingetragen wird, nicht aber in den von der Fase überdeckten axialen Bereich. Von Vorteil ist dabei, dass das Ringteil mit weniger Masse ausführbar und somit einfach auswuchtbar ist.

Wichtige Merkmale bei dem Planetengetriebemotor sind, dass die Rotorwelle des das Planetengetriebe antreibenden Elektromotors in eine als Hohlwelle ausgeführte eintreibende Welle eingesteckt ist,
wobei ein Ringteil auf die Hohlwelle aufgesteckt ist,
so, dass die Welle mit der Hohlwelle mittels des Ringteils durch eine vorgenannte Verbindung verbunden ist.

Von Vorteil ist dabei, dass der Spannring an der eintreibenden Seite des Planetengetriebes anordenbar ist. Somit ist an der schnell drehenden Seite eine kraftschlüssige Verbindung bewirkbar.

Weitere Vorteile ergeben sich aus den Unteransprüchen. Die Erfindung ist in den vorliegenden Ansprüchen definiert.

Die Erfindung wird nun anhand von Abbildungen näher erläutert:
In der Figur 1 ist eine Seitenansicht auf einen ersten Spannring einer erfindungsgemäßen Verbindung, insbesondere Welle-Nabe Verbindung, eines Planetengetriebemotors dargestellt.

In der Figur 2 ist eine zugehörige Schrägansicht dargestellt.

In der Figur 3 ist ein die Ringachse des Spannrings enthaltender Längsschnitt durch den Spannring dargestellt.

In der Figur 4 ist eine Schrägansicht auf einen Bereich einer Hohlwelle 40 dargestellt.

In der Figur 5 ist eine Schrägansicht auf den auf die Hohlwelle 40 aufgeschobenen Spannring dargestellt.

In der Figur 6 ist ein zu Figur 5 zugehöriger Längsschnitt dargestellt.

In der Figur 7 ist ein senkrecht zur Ringachse ausgerichteter Querschnitt durch den Spannring dargestellt.

In der Figur 8 ist eine Schrägansicht auf einen zweiten Spannring dargestellt, der sich nur in einer anstatt der konusförmigen Fase 3 anders ausgeführten Fase 80 unterscheidet vom ersten Spannring.

In der Figur 9 ist ein zur Figur 8 gehöriger, die Ringachse enthaltender Längsschnitt durch den zweiten Spannring dargestellt.

In der Figur 10 ist eine Schrägansicht auf einen dritten Spannring dargestellt, der sich nur in einer anstatt der konusförmigen Fase 3 anders ausgeführten Fase 100 unterscheidet vom ersten Spannring und zweiten Spannring.

In der Figur 11 ist ein zur Figur 10 gehöriger, die Ringachse enthaltender Längsschnitt durch den dritten Spannring dargestellt.

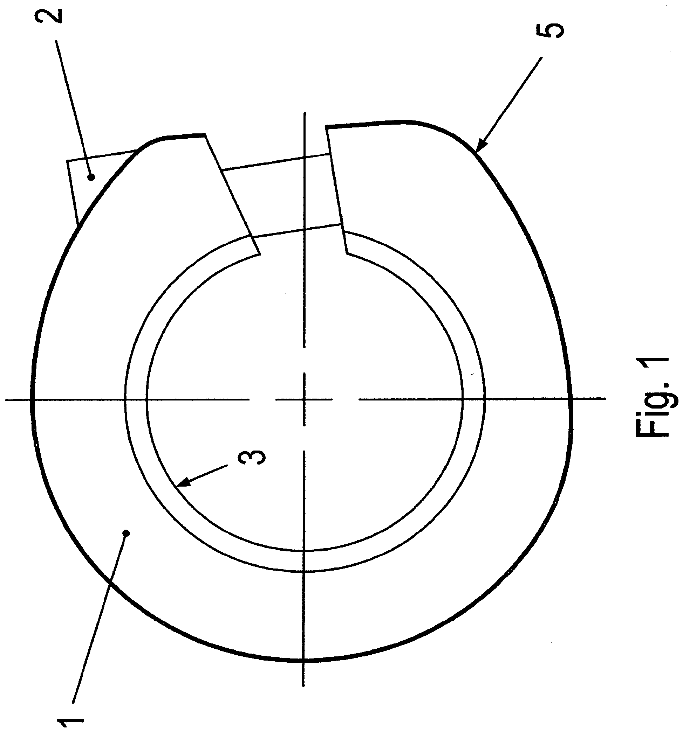

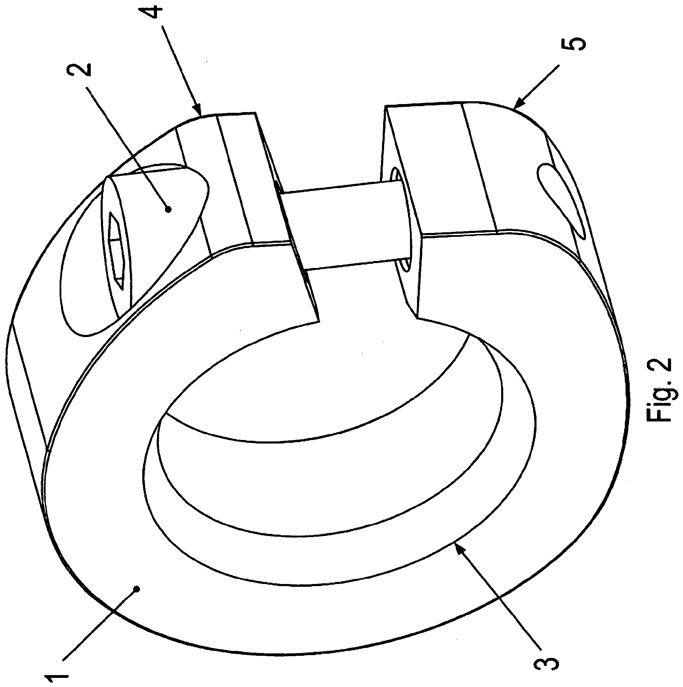

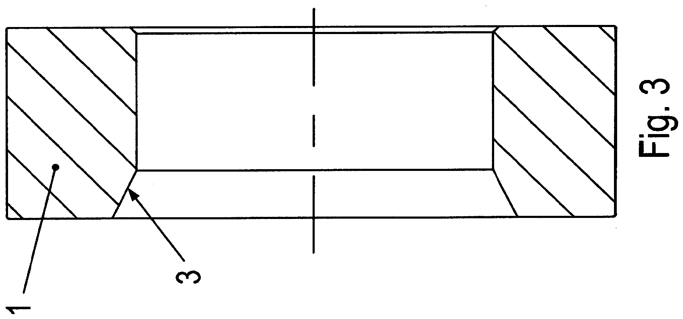

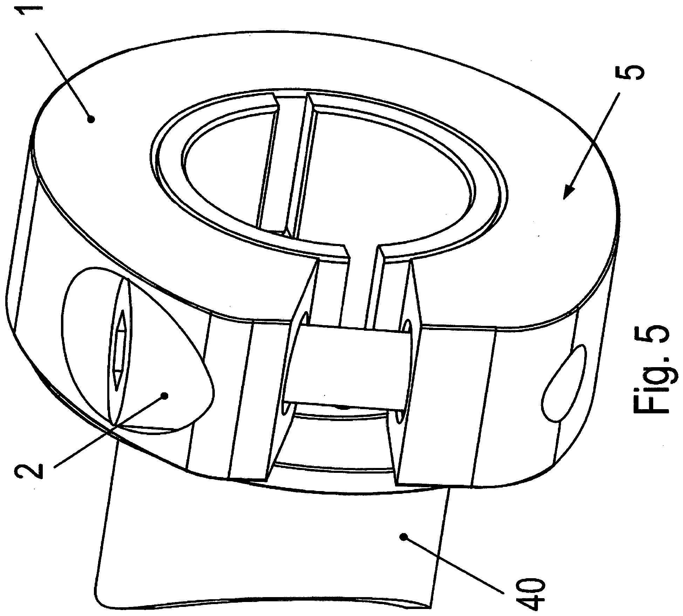

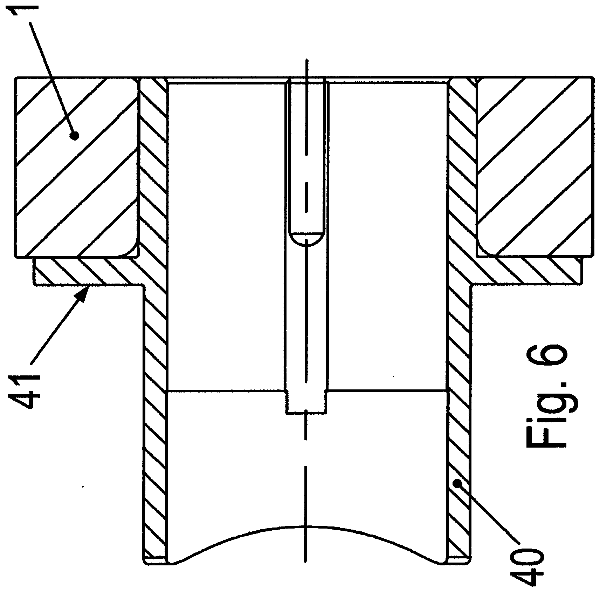

Wie in Figur 1 bis Figur 7 dargestellt, weist der Spannring ein Ringteil 1 auf, welches an einer Umfangsposition durchgehend geschlitzt ausgeführt ist. Dieser Schlitz weist eine nach radial außen hinzunehmende Schlitzweite auf.

Eine schräg ausgerichtete, in das Ringteil 1 eingebrachte Bohrung nimmt eine Schraube 2 auf, deren Schraubenkopf an einer Fläche anliegt, in welche die Bohrung eingebracht ist. Dabei ist die Bohrung zwischen Fläche und Schlitz als Rundbohrung ausgeführt und vom Schlitz bis zum Austrittsbereich der Bohrung ist die Bohrung als Gewindebohrung ausgeführt, in welche der Gewindebereich der Schraube 2 eingeschraubt ist. Somit ist durch Anziehen der Schraube die Schlitzweite verringerbar und eine im Ringteil 1 aufgenommene Hohlwelle 40 auf eine in diese Hohlwelle 40 eingesteckte Vollwelle aufschrumpfbar.

Dabei weist die die Schraube 2 aufnehmende Bohrung eine Bohrungsachse auf, welche einen nicht verschwindenden Winkel zur Normalenrichtung derjenigen Ebene, insbesondere Hilfsebene, aufweist, welche die Ringachse enthält und durch die in Umfangsrichtung gesehene Mitte des Schlitzes, insbesondere durch die auf kleinstem Radialabstand des Schlitzes, in Umfangsrichtung gesehene Mitte des Schlitzes führt.

Der am Ringteil 1 ausgeführte Schlitz ist durch am Ringteil 1 ausgebildete ebene Flächen begrenzt, wobei die zu den beiden Flächen gehörenden Ebenen die Ringachse nicht enthalten und wobei die Schnittgerade der beiden Ebenen beabstandet ist von der Ringachse. Die beiden Ebenen sind somit nicht parallel. Daher wächst die Schlitzweite nach radial außen hin an.

Des Weiteren ist der Bereich des Ringteils 1 zwischen Fläche und Schlitz verdickt ausgeführt. Hierzu ist in der Figur 1, 2, 5 und 7 ein Verdickungsbereich 4 am Ringteil 1 ausgeführt. Dieser Verdickungsbereich 4 grenzt an den Schlitz an und erstreckt sich in Umfangsrichtung mindestens bis zu dem von der Fläche überdeckten Umfangswinkelbereich.

Der Bereich des Ringteils 1 zwischen Schlitz und Gewindebereich weist ebenfalls einen Verdickungsbereich 5 auf. Somit ist auch in dem vom Gewindebereich überdeckten Umfangswinkelbereich das Ringteil 1 verdickt ausgeführt, also in radialer Richtung ausgeweitet.

In axialer Richtung hingegen weist das Ringteil 1, insbesondere auch in den Verdickungsbereichen 4 und 5, eine konstante Breite auf.

Einerseits ist unter geringem Materialaufwand somit eine genügend hohe Festigkeit zur Aufnahme der Schraube 2 erreichbar, andererseits ist mittels der in dem Verdickungsbereich 4 und in dem Verdickungsbereich 5 aufgenommenen Schraube eine vorgesehene Massenverteilung erreichbar.

Der Verdickungsbereich 4 und der Verdickungsbereich 5 sind derart geformt, dass das Ringteil 1 zusammen mit der Schraube 2 ausgewuchtet ist

Am Außenumfang der Hohlwelle 40 ist in einem axialen Bereich ein Bund 41 an der Hohlwelle 40 angeformt. Somit steht dieser Bund 41, insbesondere Bundkragen, radial hervor.

Das Ringteil 1 liegt am Bund 41 an und ist somit axial zum Bund 41 hin begrenzt.

Das Ringteil 1 ist in demjenigen axialen Bereich auf die Hohlwelle 40 aufgesteckt, welcher sich vom Bund 41 bis zum ersten axialen Endbereich erstreckt.

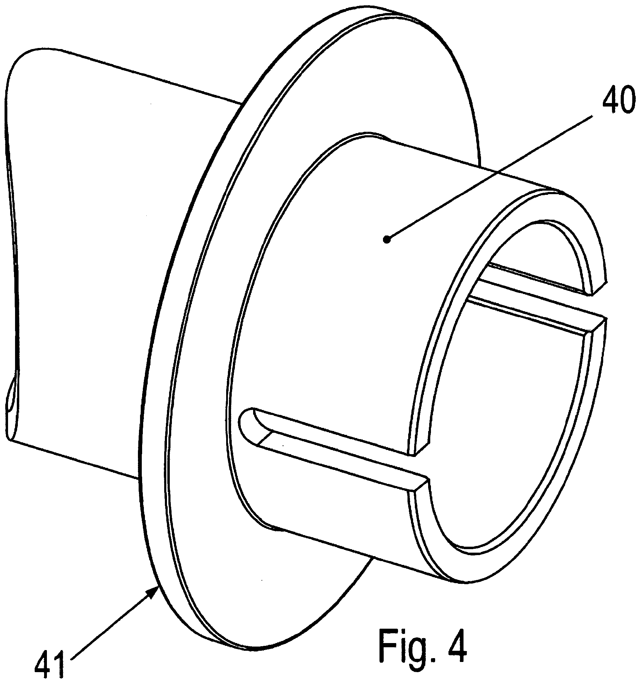

Die Hohlwelle 40 weist axial sich erstreckende, radial durch die Wandung durchgehende Schlitze auf. Dabei sind die Schlitze in Umfangsrichtung regelmäßig voneinander beabstandet. In Figur 4 sind hierzu zwei Schlitze vorgesehen, welche einen Umfangswinkelabstand von 180° zueinander aufweisen.

Die Schlitze erstrecken sich vom ersten axialen Endbereich der Hohlwelle 40 bis zu einer axialen Position, welche einen nicht verschwindenden Abstand zum Bund 41 aufweist.

Wie oben beschrieben, zieht sich das Ringteil 1 bei Anziehen der Schraube 3 zusammen, insbesondere wobei die Schlitzweite verringert wird, und drückt somit auf die Hohlwelle 40.

Da die axial sich erstreckenden Schlitze in der Hohlwelle 40 vom Bund beabstandet sind, wird die Hohlwelle 40 in dem von den Schlitzen überdeckten axialen Bereich stärker verformt als in dem zwischen dem Bund 41 und dem von den Schlitzen überdeckten axialen Bereich angeordneten axialen Bereich.
Das Ringteil 1 weist eine konische Fase 3 auf, welche an der dem Bund 41 und der Hohlwelle 40 zugewandten Innenkante des Ringteils 1 angeordnet ist. Somit ist die Schrumpfwirkung im von den Schlitzen der Hohlwelle 40 überdeckten axialen Bereich ungestört. Denn in dem axialen Bereich zwischen Bund 41 und dem von den Schlitzen überdeckten axialen Bereich berührt das Ringteil 1 die Hohlwelle 40 nicht.

Es ist also ein Freiraum zwischen Hohlwelle 40 und Ringteil 1 mittels der Fase 3 gebildet. Somit ist beim Aufschrumpfen des Ringteils 1 auf die Hohlwelle 40 der Druck auf den geschlitzten axialen Bereich der Hohlwelle 40 aufgebracht, nicht aber auf den ungeschlitzten Bereich, insbesondere welcher an den Bund 41 angrenzt.

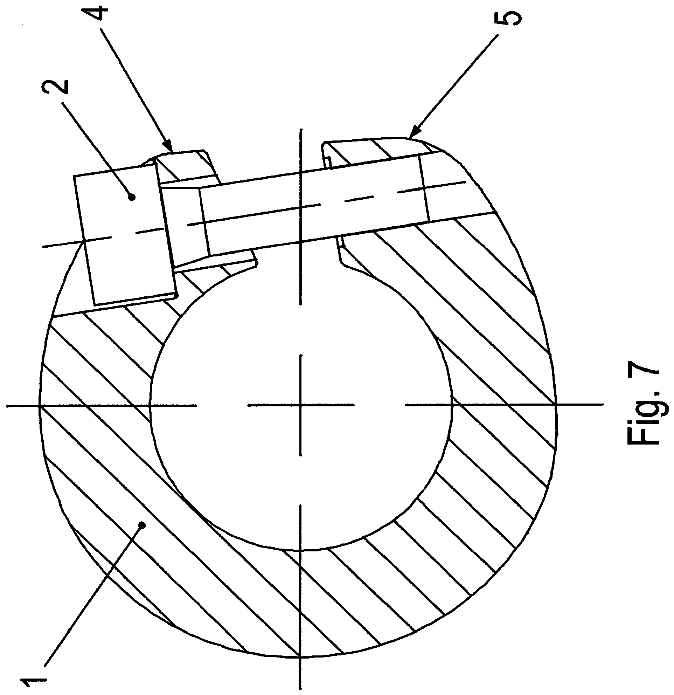

Wie in Figur 7 gezeigt, weist das Ringteil 1 der Schraube 2 gegenüberliegend keine Auswuchtbohrung auf, da die Auswuchtung mittels der Formgebung der Verdickungsbereiche 4 und 5 erfolgt.

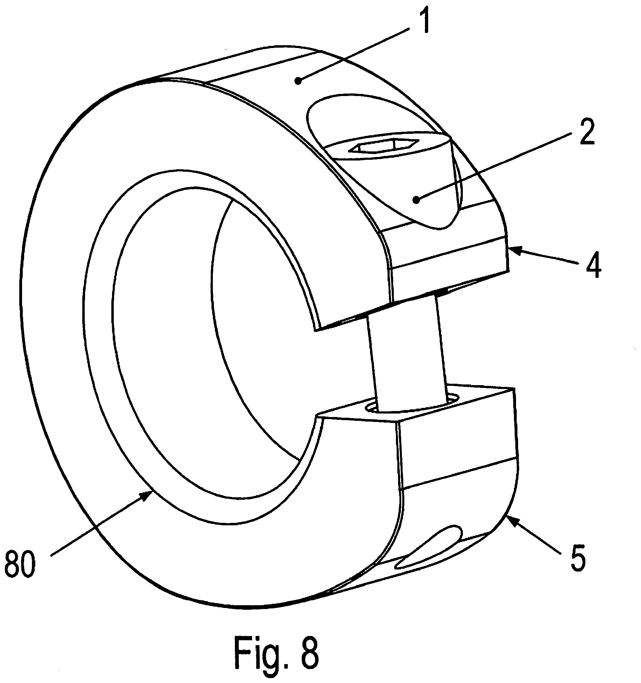

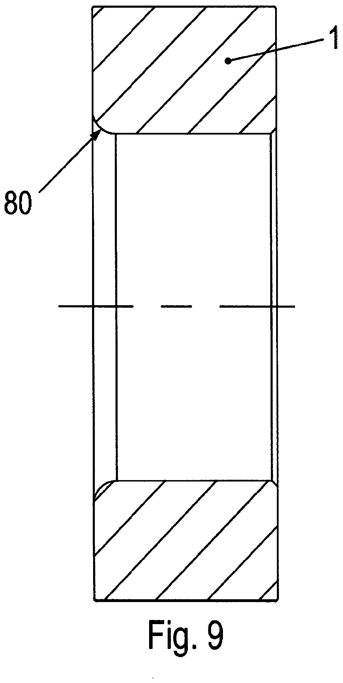

Wie in Figur 8 und Figur 9 dargestellt, ist bei einem zweiten erfindungsgemäßen Ausführungsbeispiel statt der konusförmigen Fase 3, welche als Querschnitt einen Geradenabschnitt aufweist und durch Rotation dieses Geradenabschnitts um die Ringachse des Ringteils 1 darstellbar ist, eine krümmungskegelförmige Fase 80 auf, welche durch Rotation eines gekrümmten Kurvenabschnitts entsteht. Der gekrümmte Kurvenabschnitt ist entweder ein Kreisabschnitt, so dass eine einfache Herstellung ausführbar ist, oder ein Ellipsenabschnitt, so dass eine erhöhte Festigkeit im Übergangsbereich des Ringteils 1 zur Fase 80 hin erreicht ist. In jedem Fall geht die Fase 80 glatt über in den Bereich des Ringteils 1 mit kleinstem Innendurchmesser, also Berührbereich zur Hohlwelle 40 hin.

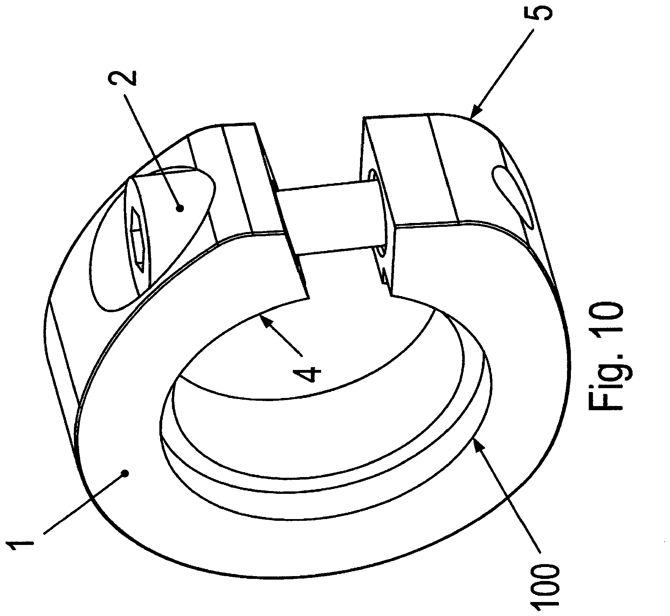

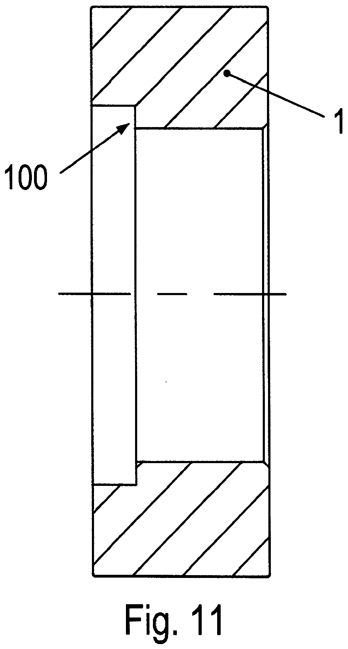

Wie in Figur 10 und Figur 11 dargestellt, ist bei einem dritten erfindungsgemäßen Ausführungsbeispiel statt der konusförmigen Fase 3 des ersten Ausführungsbeispiels und statt der Fase 80 des zweiten Ausführungsbeispiels eine Stufenfase 100, also einem zylindrischen Absatz, ausgeführt. Somit weist das Ringteil 1 im von der Stufenfase 100 überdeckten axialen Bereich einen insbesondere konstanten Innendurchmesser auf, welcher größer ist als der kleinste Innendurchmesser des Ringteils 1. Wichtig ist dabei, dass der im von der Stufenfase 100 überdeckten axialen Bereich vorhandene Innendurchmesser unterschiedlich ist von dem kleinsten Innendurchmesser des Ringteils 1, welchen dieses im Berührbereich zur Hohlwelle 40 hin, also im geschlitzten Bereich der Hohlwelle 40 aufweist.

### Bezugszeichenliste

1 Ringteil
2 Schraube
3 konusförmige Fase
4 erster Verdickungsbereich
5 zweiter Verdickungsbereich
40 Hohlwelle
41 Bund, insbesondere Bundkragen
80 krümmungskegelförmige Fase
100 Stufenfase

## Patentansprüche

1. Verbindung, aufweisend eine in eine Hohlwelle (40) zumindest teilweise eingesteckte Welle und ein auf die Hohlwelle (40) aufgestecktes Ringteil (1),
**wobei** das Ringteil (1) axial begrenzt ist von einem an der Welle ausgeformten, radial hervorstehenden Bund (41) /oder das Ringteil (1) an einem Bund (41) der Welle, anliegt,
wobei die Hohlwelle (40) vom Bund (41) beabstandete Schlitze, **nämlich** Axialschlitze aufweist,
wobei das Ringteil (1), eine Fase (3) aufweist,
so, dass der Innendurchmesser des Ringteils (1) in dem von der Fase (3) überdeckten axialen Bereich größer ist als der Innendurchmesser in demjenigen axialen Bereich, in welchem das Ringteil (1) die Hohlwelle (40) berührt,
wobei das Ringteil (1) Verdickungsbereiche (4, 5) aufweist, **wobei** das Ringteil (1) im von den Verdickungsbereichen (4, 5) überdeckten Umfangswinkelbereich eine größere radiale Breite aufweist als in den sonstigen Umfangswinkelbereichen,
**dadurch gekennzeichnet, dass**
**das Ringteil (1) an seinem Umfang einen radial und axial durchgehenden Schlitz aufweist,**
**wobei der Schlitz eine nach radial außen zunehmende Schlitzweite aufweist,**
**wobei eine Schraube (2) durch den Schlitz hindurchgeführt ist und der Schraubenkopf der Schraube (2) ist an einer Fläche abgestützt, wobei der Gewindebereich der Schraube (2) in eine auf der von der Fläche abgewandten Seite des Schlitzes angeordneten Gewindebohrung eingeschraubt ist,**
**wobei die Schraubenachse der Schraube (2) einen nicht verschwindenden Winkel zur Normalenrichtung derjenigen Ebene, aufweist, welche die Ringachse enthält und durch die, in Umfangsrichtung gesehene Mitte des Schlitzes führt,**
**wobei das Ringteil (1) in dem vom Gewindebereich überdeckten Umfangswinkelbereich verdickt ausgeführt ist, also in radialer Richtung ausgeweitet ist.**

2. Verbindung nach Anspruch 1,
**dadurch gekennzeichnet, dass**
der erste der Verdickungsbereiche (4, 5) den von der Gewindebohrung überdeckten Umfangswinkelbereich überdeckt,
wobei der zweite der Verdickungsbereiche (4, 5) einen zwischen Schlitz und Fläche angeordneten Umfangswinkelbereich überdeckt.

3. Verbindung nach mindestens einem der vorangegangenen Ansprüche,
**dadurch gekennzeichnet, dass**
die Verdickungsbereiche (4, 5) derart ausgeformt sind, dass das Ringteil (1) samt der Schraube (2) ausgewuchtet sind.

4. Verbindung nach mindestens einem der vorangegangenen Ansprüche,
**dadurch gekennzeichnet, dass**
die radiale Breite des Ringteils (1) abhängig vom Umfangswinkel ist, wobei die radiale Breite in den von den Verdickungsbereichen (4, 5) überdeckten Umfangswinkelbereichen größer ist als in den übrigen Umfangswinkelbereichen.

5. Verbindung nach mindestens einem der vorangegangenen Ansprüche,
**dadurch gekennzeichnet, dass**
der vom in die Hohlwelle (40) eingesteckten Bereich der Welle überdeckte axiale Bereich mit dem vom Ringteil (1) überdeckten axialen Bereich zumindest überlappt.

6. Verbindung nach mindestens einem der vorangegangenen Ansprüche,
**dadurch gekennzeichnet, dass**
die Schlitze der Hohlwelle (40) in Umfangsrichtung regelmäßig voneinander beabstandet sind.

7. Verbindung nach mindestens einem der vorangegangenen Ansprüche,
**dadurch gekennzeichnet, dass**
die Schlitze durch die Hohlwelle (40 radial durchgehend, axial gerichtet sind.

8. Verbindung nach mindestens einem der vorangegangenen Ansprüche,
**dadurch gekennzeichnet, dass**
die Anzahl der Schlitze zwei oder größer ist.

9. Verbindung nach mindestens einem der vorangegangenen Ansprüche,
**dadurch gekennzeichnet, dass**
die Schraubenachse der Schraube (2) zu einer, geraden, Hilfslinie einen Winkel aufweist, wobei der Betrag des Winkels zwischen 5° und 30° beträgt, wobei die Hilfslinie durch den Mittelpunkt des Ringteils (1) und durch die Mitte zwischen den innenliegenden, also auf kleinstem Durchmesser befindlichen Kanten des Schlitzes im Ringteil (1) verläuft.

10. Verbindung nach mindestens einem der vorangegangenen Ansprüche,
**dadurch gekennzeichnet, dass**
die Hohlwelle (40) in dem von dem Ringteil (1) überdeckten axialen Bereich einen konstanten Außendurchmesser aufweist.

11. Verbindung nach mindestens einem der vorangegangenen Ansprüche,
**dadurch gekennzeichnet, dass**
der von der Fase (3) überdeckte axiale Bereich den vom Bund (41) überdeckten axialen Bereich berührt oder an diesen angrenzt.

12. Verbindung nach mindestens einem der vorangegangenen Ansprüche,
**dadurch gekennzeichnet, dass**
die Wandstärke und/oder der Querschnitt des Ringteils (1) abhängig vom Umfangswinkel ist.

13. Verbindung nach mindestens einem der vorangegangenen Ansprüche,
**dadurch gekennzeichnet, dass**
die Fase (3) als konusförmige Fase (3) ausgeführt ist
oder als krümmungskegelförmige Fase (80)
oder als Stufenfase (100).

14. Verbindung nach mindestens einem der vorangegangenen Ansprüche,
**dadurch gekennzeichnet, dass**
das Ringteil (1) von der Hohlwelle (40) in dem von der Fase (3) überdeckten axialen Bereich beabstandet ist,
wobei der von der Fase (3) überdeckte axiale Bereich sich anschließt an den geschlitzten Bereich der Hohlwelle (40), so dass die Schrumpfkraft des Ringteils (1) in den geschlitzten Bereich der Hohlwelle (40) eingetragen wird, nicht aber in den von der Fase (3) überdeckten axialen Bereich.

15. Planetengetriebemotor,
wobei die Rotorwelle des das Planetengetriebe antreibenden Elektromotors in eine als Hohlwelle (40) ausgeführte eintreibende Welle eingesteckt ist,
wobei ein Ringteil (1) auf die Hohlwelle (40) aufgesteckt ist,
so, dass die Welle mit der Hohlwelle (40) mittels des Ringteils (1) durch eine Verbindung nach mindestens einem der vorangegangenen Ansprüche verbunden ist.

## Claims

1. A connection, having a shaft, at least partially inserted in a hollow shaft (40), and a ring part (1), placed onto the hollow shaft (40), wherein the ring part (1) is axially bounded by a collar (41) formed on the shaft and radially projecting or the ring part (1) rests against a collar (41) of the shaft, wherein the hollow shaft (40) has slots, namely axial slots, spaced apart from the collar (41), wherein the ring part (1) has a bevel (3), so that the inner diameter of the ring part (1) is greater in the axial region covered by the bevel (3) than the inner diameter in that axial region in which the ring part (1) contacts the hollow shaft (40), wherein the ring part (1) has thickening regions (4, 5), wherein the ring part (1) has a greater radial width in the circumferential angular region covered by the thickening regions (4, 5) than in the other circumferential angular regions, **characterised in that** the ring part (1) has a radially and axially through-passing slot at its circumference, wherein the slot width of the slot increases radially outwards, wherein a screw (2) is passed through the slot and the screw head of the screw (2) is supported on a surface, wherein the threaded region of the screw (2) is screwed into a tapped bore arranged on the slot side remote from the surface, wherein the screw axis of the screw (2) is at a not insignificant angle to the normal direction of that plane which comprises the ring axis and passes through the middle of the slot viewed in the circumferential direction, wherein the ring part (1) is thickened in the circumferential angular region covered by the threaded region, therefore is widened in a radial direction.

2. A connection according to claim 1, **characterised in that** the first of the thickening regions (4, 5) covers the circumferential angular region covered by the tapped bore, wherein the second of the thickening regions (4, 5) covers a circumferential angular region arranged between slot and surface.

3. A connection according to at least one of the preceding claims, **characterised in that** the thickening regions (4, 5) are formed in such a manner that the ring part (1) together with the screw (2) are balanced.

4. A connection according to at least one of the preceding claims, **characterised in that** the radial width of the ring part (1) is dependent on the circumferential angle, wherein the radial width is greater in the circumferential angular regions covered by the thickening regions (4, 5) than in the other circumferential angular regions.

5. A connection according to at least one of the preceding claims, **characterised in that** the axial region covered by the shaft region inserted in the hollow shaft (40) at least overlaps with the axial region covered by the ring part (1).

6. A connection according to at least one of the preceding claims, **characterised in that** the slots of the hollow shaft (40) are regularly spaced apart from one another in the circumferential direction.

7. A connection according to at least one of the preceding claims, **characterised in that** the slots pass radially through the hollow shaft (40) and are directed axially.

8. A connection according to at least one of the preceding claims, **characterised in that** the number of the slots is two or more.

9. A connection according to at least one of the preceding claims, **characterised in that** the screw axis of the screw (2) is at an angle to a straight auxiliary line, wherein the size of the angle is between 5° and 30°, wherein the auxiliary line runs through the central point of the ring part (1) and through the middle between the inner edges, therefore edges located on the smallest diameter, of the slot in the ring part (1).

10. A connection according to at least one of the preceding claims, **characterised in that** the hollow shaft (40) has a constant outer diameter in the axial region covered by the ring part (1).

11. A connection according to at least one of the preceding claims, **characterised in that** the axial region covered by the bevel (3) contacts the axial region covered by the collar (41) or is adjacent thereto.

12. A connection according to at least one of the preceding claims, **characterised in that** the wall thickness and/or the cross-section of the ring part (1) is dependent on the circumferential angle.

13. A connection according to at least one of the preceding claims, **characterised in that** the bevel (3) is in the form of a conical bevel (3) or in the form of a bevel (80) in the form of a curved taper or in the form of a stepped bevel (100).

14. A connection according to at least one of the preceding claims, **characterised in that** the ring part (1) is spaced apart from the hollow shaft (40) in the axial region covered by the bevel (3), wherein the axial region covered by the bevel (3) adjoins the slotted region of the hollow shaft (40), so that the shrink force of the ring part (1) is applied to the slotted region of the hollow shaft (40), not however to the axial region covered by the bevel (3).

15. A planetary gear motor, wherein the rotor shaft of the electric motor driving the planetary gear is inserted into an input shaft in the form of a hollow shaft (40), wherein a ring part (1) is placed onto the hollow shaft (40), so that the shaft is connected to the hollow shaft (40) by means of the ring part (1) by a connection according to at least one of the preceding claims.

## Revendications

1. Liaison comprenant un arbre emboîté au moins partiellement dans un arbre creux (40) et une pièce annulaire (1) emboîtée sur ledit arbre creux (40),
la pièce annulaire (1) étant délimitée axialement par une collerette (41) faisant saillie dans le sens radial, façonnée sur l'arbre, ou bien ladite pièce annulaire (1) étant en applique contre une collerette (41) dudit arbre,
ledit arbre creux (40) étant muni de fentes, plus précisément de fentes axiales situées à distance de ladite collerette (41),
sachant que la pièce annulaire (1) est pourvue d'un chanfrein (3),
de sorte que le diamètre intérieur de la pièce annulaire (1) est plus grand, dans la région axiale couverte par ledit chanfrein (3), que le diamètre intérieur dans la région axiale dans laquelle ladite pièce annulaire (1) est en contact avec l'arbre creux (40),
la pièce annuaire (1) comportant des zones épaissies (4, 5), ladite pièce annulaire (1) présentant, dans la plage d'angles circonférentiels couverte par lesdites zones épaissies (4, 5), une plus grande largeur radiale que dans les plages d'angles circonférentiels restantes, **caractérisée par le fait que**
la pièce annuaire (1) est munie, sur son pourtour, d'une fente ininterrompue dans les directions radiale et axiale,
laquelle fente présente une largeur croissant radialement vers l'extérieur,
sachant qu'une vis (2) est insérée à travers ladite fente, et que la tête de ladite vis (2) est en appui contre une surface, la région filetée de ladite vis (2) étant vissée dans un perçage taraudé pratiqué du côté de ladite fente qui pointe à l'opposé de ladite surface,
l'axe de ladite vis (2) décrivant un angle immuable avec la direction perpendiculaire au plan qui contient l'axe de l'anneau et par lequel passe le centre de la fente, vu en observant dans la direction périphérique,
ladite pièce annulaire (1) étant de réalisation épaissie dans la plage d'angles circonférentiels couverte par la région filetée, c'est-à-dire qu'elle est élargie dans la direction radiale.

2. Liaison selon la revendication 1,
**caractérisée par le fait que**
la première zone, au sein des zones épaissies (4, 5), couvre la plage d'angles circonférentiels couverte par le perçage taraudé,
la seconde zone, au sein desdites zones épaissies (4, 5), couvrant une plage d'angles circonférentiels située entre la fente et la surface.

3. Liaison selon au moins l'une des revendications précédentes,
**caractérisée par le fait que**
les zones épaissies (4, 5) sont configurées de manière à procurer un équilibrage de la pièce annulaire (1), conjointement à la vis (2).

4. Liaison selon au moins l'une des revendications précédentes,
**caractérisée par le fait que**
la largeur radiale de la pièce annulaire (1) est tributaire de l'angle circonférentiel, ladite largeur radiale étant plus grande, dans la plage d'angles circonférentiels couverte par les zones épaissies (4, 5), que dans les plages d'angles circonférentiels restantes.

5. Liaison selon au moins l'une des revendications précédentes,
**caractérisée par le fait que**
la région axiale, couverte par la région de l'arbre emboîtée dans l'arbre creux (40), est au moins en chevauchement avec la région axiale couverte par la pièce annulaire (1).

6. Liaison selon au moins l'une des revendications précédentes,
**caractérisée par le fait que**
les fentes de l'arbre creux (40) sont espacées régulièrement les unes des autres dans la direction périphérique.

7. Liaison selon au moins l'une des revendications précédentes,
**caractérisée par le fait que**
les fentes sont dirigées axialement, en traversant radialement l'arbre creux (4) de part en part.

8. Liaison selon au moins l'une des revendications précédentes,
**caractérisée par le fait que**
les fentes sont au nombre de deux ou plus.

9. Liaison selon au moins l'une des revendications précédentes,
**caractérisée par le fait que**
l'axe de la vis (2) décrit un angle avec une ligne auxiliaire au tracé rectiligne, la valeur dudit angle étant comprise entre 5° et 30°, sachant que ladite ligne auxiliaire passe par le point central de la pièce annulaire (1) et par le centre entre les arêtes de la fente, pratiquée dans ladite pièce annulaire (1), qui occupent des positions intérieures et sont, par conséquent, situées sur le plus petit diamètre.

10. Liaison selon au moins l'une des revendications précédentes,
**caractérisée par le fait que**
l'arbre creux (40) présente un diamètre extérieur constant dans la région axiale couverte par la pièce annulaire (1).

11. Liaison selon au moins l'une des revendications précédentes,
**caractérisée par le fait que**
la région axiale couverte par le chanfrein (3) est en contact avec la région axiale couverte par la collerette (41), ou est limitrophe de ladite région.

12. Liaison selon au moins l'une des revendications précédentes,
**caractérisée par le fait que**
l'épaisseur de paroi et/ou la section transversale de la pièce annulaire (1) est (sont) tributaire(s) de l'angle circonférentiel.

13. Liaison selon au moins l'une des revendications précédentes,
**caractérisée par le fait que**
le chanfrein (3) est réalisé sous la forme d'un chanfrein tronconique (3)
ou sous la forme d'un chanfrein (80) à courbure tronconique,
ou sous la forme d'un chanfrein étagé (100).

14. Liaison selon au moins l'une des revendications précédentes,
**caractérisée par le fait que**
la pièce annulaire (1) est située à distance de l'arbre creux (40) dans la région axiale couverte par le chanfrein (3),
sachant que ladite région axiale couverte par ledit chanfrein (3) se rattache à la région fendue dudit arbre creux (40), si bien que la force de contraction de ladite pièce annulaire (1) est induite dans ladite région fendue de l'arbre creux (40), mais toutefois pas dans ladite région axiale couverte par ledit chanfrein (3).

15. Moteur à engrenage planétaire
dans lequel l'arbre rotorique du moteur électrique entraînant ledit engrenage planétaire est emboîté dans un arbre d'entrée réalisé sous la forme d'un arbre creux (40),
une pièce annulaire (1) étant emboîtée sur ledit arbre creux (40),
de sorte que ledit arbre est relié audit arbre creux (40), au moyen de ladite pièce annulaire (1), par l'intermédiaire d'une liaison conforme à au moins l'une des revendications précédentes.
